# EUROPEAN PATENT SPECIFICATION

(11) **EP 3 281 557 B1**
(45) Date of publication and mention of the grant of the patent: **15.05.2019**
(21) Application number: 17182290.1
(22) Date of filing: 20.07.2017
(51) Int. Cl.: A47C 1/032

(54) **SEAT ARRANGEMENT**
SITZANORDNUNG
AGENCEMENT DE SIÈGE

(30) Priority: 08.08.2016 DE 202016104352 U
(43) Date of publication of application: 14.02.2018
(73) Proprietor: CIAR S.P.A., 61100 Pesaro (IT)
(72) Inventor: CARRERA, Massimo, 61010 Tavullia (PU) (IT)
(74) Representative: Tetzner, Michael

(56) References cited:
- DE-A1-102013 020 393
- US-A1- 2012 299 363
- US-B1- 7 325 878

## Description

The invention relates to a seat arrangement having a base frame, a seat member and a footrest.

US 7,722,114 B2 discloses a recliner chair which can be adjusted from an upright position of the seat and backrest into a reclined position with a folded-out footrest and inclined backrest. To this end, the rear end of the seat and the lower end of the backrest are supported on a movable sliding member, wherein the sliding member can be moved from a rear position into a front position and in this instance the front end of the seat is raised and the angle between the seat and backrest is increased. At the same time, the footrest is folded out by means of a rod mechanism.

US 2012/299363 A1 relates to a seating unit having a seat, a backrest and at least one foot-support ottoman, the seating unit is adapted to move between a closed, an extended and a reclined position.

An object of the invention is to produce a seat arrangement with a displaceable seat member and a footrest which can be folded in and out and which has a compact mechanism.

This object is achieved according to the invention by the features of claim 1.

The seat arrangement according to the invention has a base frame, a seat member and a footrest, wherein the seat member provides for a seat frame which is retained on a sliding member so as to be able to be pivoted about a first articulation axis, wherein the sliding member is displaceably guided between a first and a second position in a guiding profile, and wherein the footrest is articulated to the seat frame by means of a rod mechanism and can be adjusted between a folded-in position and a folded-out position. Furthermore, a drive for displacing the sliding member and for folding the footrest in and out is provided between the base frame and the rod mechanism of the footrest. Furthermore, the seat arrangement comprises a dual-arm lever arm having a first end, a second end and a central region, wherein the dual-arm lever arm is rotatably supported on the sliding member in the central region thereof and is connected with the first end thereof to the rod mechanism of the footrest and with the second end thereof to the seat frame in such a manner that a movement of the footrest between the folded-in and folded-out position brings about a pivot movement of the seat frame about the first articulation axis between a basic position and an inclined position.

As a result of the dual-arm lever arm which is rotatably supported on the sliding member, it is possible to produce a relatively compact mechanism which in comparison with conventional mechanisms requires less structural space.

The dependent claims relate to other embodiments of the invention.

According to an embodiment of the invention, it is possible to change only the seat depth by displacing the sliding member without folding out the footrest in this instance.

According to a first embodiment of the invention, the dual-arm lever arm is rotatably supported on the sliding member by means of a second articulation, wherein the first articulation is guided in a slot which is formed in the sliding member. In this manner, it is possible, on the one hand, for the seat frame to be able to be pivoted about the first articulation axis by the front end of the seat member being raised or lowered and, on the other hand, for the footrest to be able to be folded in and out.

According to a second embodiment of the invention, the connection of the dual-arm lever arm to the seat frame is carried out by means of a bearing, in particular a plain bearing or a roller bearing.

According to a third embodiment, the connection of the dual-arm lever arm to the seat frame can also be produced by means of a second articulation which is guided in a slot formed in the seat frame.

In all three production variants, a relative movement in the region of the connection of the lever arm to the sliding member or the seat frame is consequently possible in order to thereby enable the pivot movement of the seat frame about the first articulation axis.

The first articulation axis may in this instance in particular be arranged at a rear end of the seat frame whilst the rod mechanism of the footrest is coupled to a front end of the seat frame. Furthermore, between the base frame and the sliding member there may be provided at least a first resilient element which urges the sliding member into the second position in which the seat has a greater seat depth than in the first position. Furthermore, between the sliding member and the seat frame there may be provided at least a second resilient element which urges the seat frame into the basic position.

The base frame of the seat arrangement which is intended to be understood to be a stationary frame has a first transverse rod. If the drive is formed by a linear actuator, it can be coupled with one end to the first transverse rod of the stationary base frame and with the other end thereof to a second transverse rod of the rod mechanism of the footrest. In this manner, both a displacement of the seat member and folding in and out of the footrest can be carried out by means of a single drive. In this instance, it is in particular conceivable for the displacement of the seat member to be carried out initially and for the folding-out of the footrest to begin only afterwards.

The displacement of the seat member can be carried out in such a manner that the seat member in the second position of the sliding member has a seat depth which is at least 10% greater than in the first position of the sliding member. Furthermore, it is advantageous for the seat frame to be pivoted between the basic position and the inclined position through at least 5° about the first articulation axis.

According to another embodiment of the invention, the guiding profile, the sliding member, the seat frame and the rod mechanism for the footrest can be combined to form a base module which is displaceably guided in the base frame. Furthermore, a backrest may be provided, wherein the adjustment of the inclination of the backrest is carried out by means of a backrest inclination module. The backrest inclination module may in this instance comprise a coupling rod assembly which is secured with one portion to the base module and with another portion to the base frame.

Finally, there may also be provided a zero space module which has an actuation rod assembly which is secured with one portion to the base frame and with another portion to the base module. The zero space module is distinguished in that the mechanical system thereof is constructed in such a manner that the seat arrangement can be placed with a small spacing from a wall and can be moved from the upright position into a horizontal reclined position without the backrest coming into contact with the wall. This is achieved in that, when the backrest is inclined backwards, the seat is at the same time displaced forwards.

As a result of the coupling of the base module, backrest inclination module and zero space module as set out above, an adjustment of the seat arrangement from an upright position into a horizontal reclined position is possible using a single drive. In this instance, it is also possible to assume an intermediate position in which only the seat depth is increased, wherein the footrest is still folded in.

More detailed embodiments and advantages of the invention will be explained in greater detail with reference to the following description of some embodiments and the drawings, in which:
Figure 1 is a schematic side view of a first seat arrangement according to the invention in an upright basic position,
Figure 2 is a schematic side view of the first seat arrangement according to the invention in a position with an increased seat depth,
Figure 3 is a schematic side view of the first seat arrangement according to the invention in a position with the footrest half-folded-out,
Figure 4 is a schematic side view of the first seat arrangement according to the invention in a position with the footrest folded out,
Figure 5 is a three-dimensional illustration of the seat mechanism of the first seat arrangement according to the invention,
Figure 6 is a three-dimensional illustration of a detail of the seat mechanism in the region of the dual-arm lever according to a first embodiment,
Figure 7 is a three-dimensional illustration of a detail of the seat mechanism in the region of the dual-arm lever according to a second embodiment,
Figure 8 is a three-dimensional illustration of a detail of the seat mechanism in the region of the dual-arm lever according to a third embodiment,
Figure 9 is a side view of the seat mechanism in the position according to Figure 1,
Figure 10 is a side view of the seat mechanism in the position according to Figure 2,
Figure 11 is a side view of the seat mechanism in the position according to Figure 3,
Figure 12 is a side view of the seat mechanism in the position according to Figure 4,
Figure 13 is a schematic side view of a second seat arrangement according to the invention in an upright basic position,
Figure 14 is a schematic side view of the second seat arrangement according to the invention in a position with an increased seat depth,
Figure 15 is a schematic side view of the second seat arrangement according to the invention in a position with a folded-out footrest,
Figure 16 is a schematic side view of the second seat arrangement according to the invention in a position with an additionally inclined backrest,
Figure 17 is a three-dimensional illustration of the seat mechanism of the second seat arrangement according to the invention,
Figure 18 is a three-dimensional illustration of the seat mechanism of the second seat arrangement according to the invention in the position according to Figure 9,
Figure 19 is a three-dimensional illustration of the seat mechanism of the second seat arrangement according to the invention in the position according to Figure 10,
Figure 20 is a three-dimensional illustration of the seat mechanism of the second seat arrangement according to the invention in the position according to Figure 11,
Figure 21 is a three-dimensional illustration of the seat mechanism of the second seat arrangement according to the invention in the position according to Figure 12.

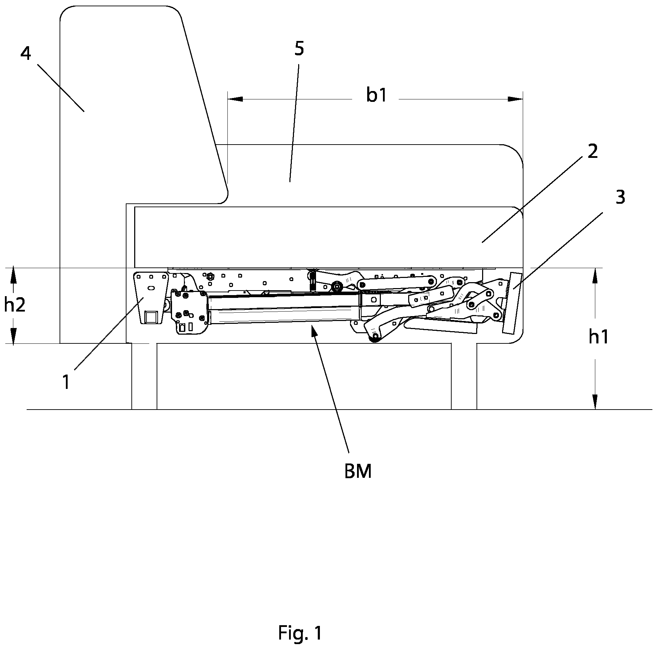

A first embodiment of a seat arrangement is first explained in greater detail with reference to Figures 1 to 9.

The seat arrangement comprises a base frame 1, a seat member 2 and a footrest 3. Optionally, a backrest 4 and an armrest 5 may further be provided.

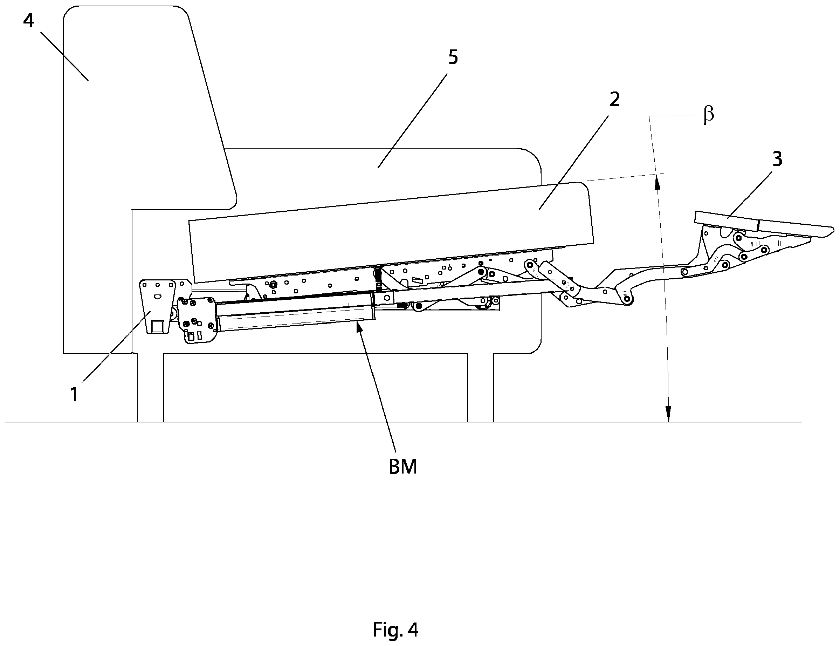

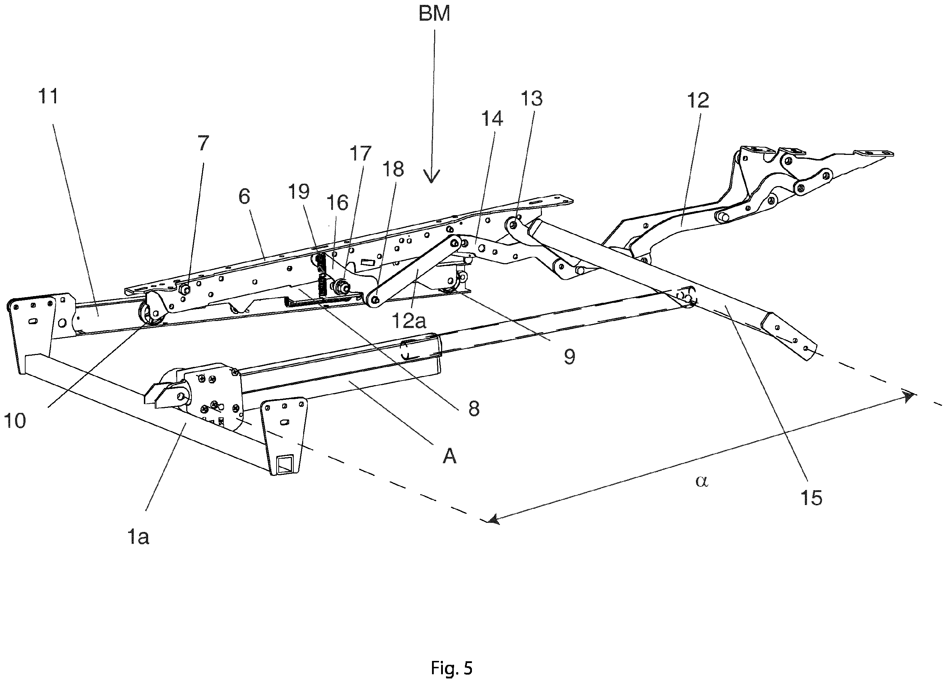

Furthermore, the seat arrangement comprises a seat mechanism which is constructed as a base module BM and which is shown in Figures 1 to 4 as different side views and in Figure 5 as a three-dimensional illustration according to the position illustrated in Figure 4. The base module BM is explained in greater detail below with reference to Figure 5, wherein only the left half is illustrated. The seat member 2 has a seat frame 6 which is retained on a sliding member 8 so as to be able to be pivoted about a first articulation axis 7. The sliding member 8 is displaceably guided with a front roller 9 and a rear roller 10 in a guiding profile 11. The base module BM further comprises a rod mechanism 12 which is composed of a plurality of components and which is articulated with a third articulation 13 and a fourth articulation 14 in an articulated manner to the seat frame 6. The rod mechanism may in this instance be adjusted between a folded-in position according to Figure 1 and a folded-out position according to Figure 4.

Figure 5 shows only the left side of the base module BM. The base module is also provided at the right-hand side so that the seat frame 6, the sliding member 8, the guiding profile 11 and the corresponding rod mechanism 12 of the footrest are each constructed in two parts and arranged in a mirror-symmetrical manner.

The base frame 1 has a first transverse rod 1a which connects both sides of the base module to each other. The guiding profile 11 of one side is thus secured to one end of the transverse rod 1a and the guiding profile of the other side is secured to the other end of the transverse rod 1a. The rod mechanisms 12 of the footrest 3 which are provided at both sides are also connected to each other by means of a second transverse rod 15. Between the first transverse rod 1a and the second transverse rod 15, there is provided a drive A which is constructed as a linear actuator and which is coupled with one end to the first transverse rod 1a of the base frame 1 and with the other end thereof to the second transverse rod 15 of the rod mechanism 12 of the footrest. The base frame 1 and consequently also the first transverse rod 1a are arranged in a fixed or stationary manner in the seat arrangement. An actuation of the drive A in order to change the spacing a between the first transverse rod 1a and the second transverse rod 15 brings about a folding-out or folding-in of the footrest 3 using the rod mechanism 12.

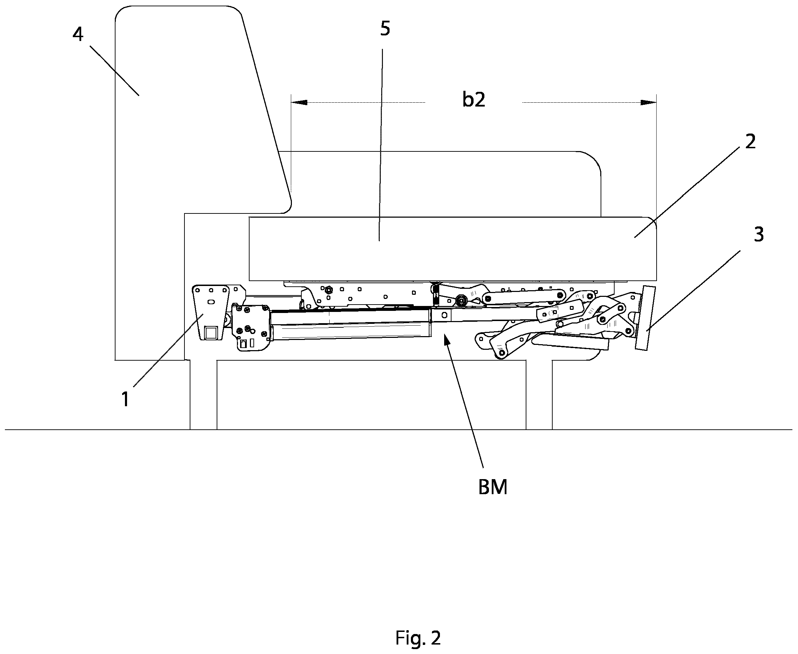

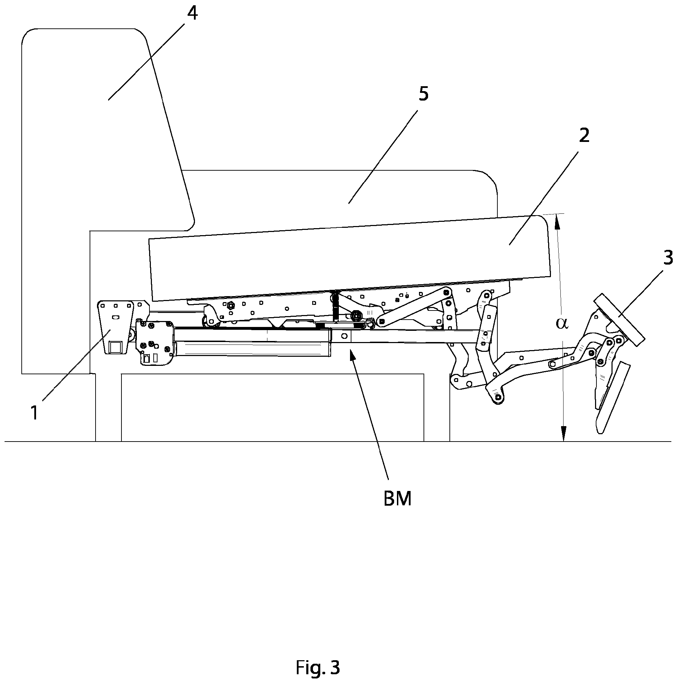

However, the drive A serves not only to fold out the footrest 3 from the position shown in Figure 2 via the intermediate position according to Figure 3 into the folded-out position shown in Figure 4, but instead also enables a displacement of the seat member from a first position of the sliding member (according to Figure 1) in a second position of the sliding member (according to Figure 2), wherein the seat member in the second position of the sliding member has a seat depth (b2 ≥1.1* b1) which is at least 10% greater than in the first position of the sliding member. Furthermore, as a result of the single drive A when folding out the footrest, a pivoting of the seat member about the first articulation axis 7 and consequently lifting of the front end of the seat member are brought about, as can be seen in Figures 3 (angle α) and 4 (angle β).

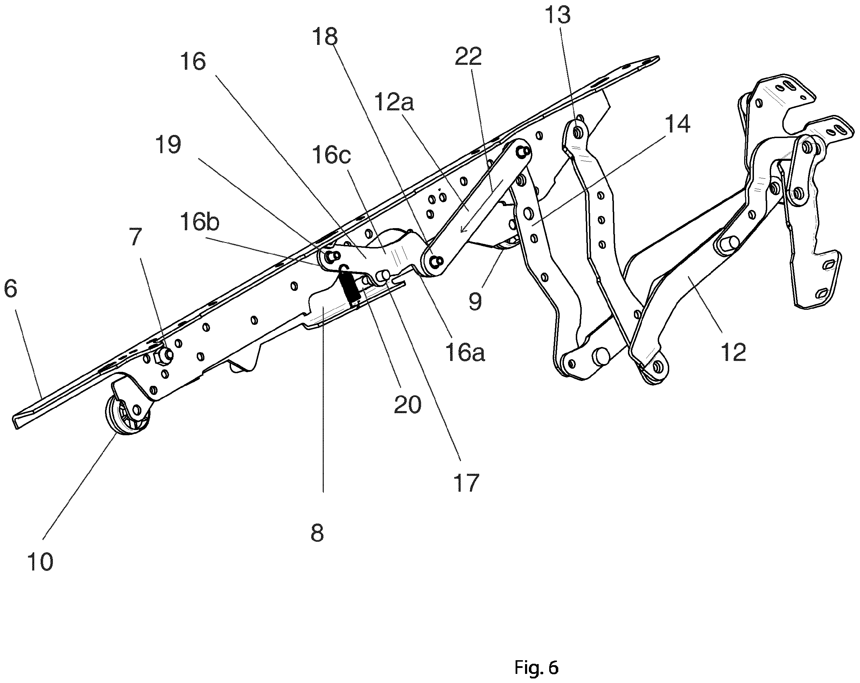

In order to be able to produce all these functions with a single drive, there is further provided a dual-arm lever arm 16 which has a first end 16a, a second end 16b and a central region 16c (Figure 6).

The dual-arm lever arm 16 is rotatably supported on the sliding member in a central region 16c by means of a second articulation 17, whilst the first end 16a thereof is connected to the rod mechanism 12 of the footrest 3 and the second end 16b thereof to the seat frame 6 in such a manner that a movement of the footrest 3 between the folded-in and folded-out position brings about a pivot movement of the seat frame about the first articulation axis 7 between a basic position according to Figure 1 and an inclined position according to Figure 4.

The connection between the first end 16a and the rod mechanism 12 is carried out by means of a fifth articulation 18 and the connection between the second end 16b and the seat frame 6 by means of a sixth articulation 19. Since the seat frame 6 and the sliding member 8 are coupled to each other in an articulated manner by means of the first articulation axis 7, one of the coupling locations of the dual-arm lever arm 16 to the seat frame 6 or the sliding member 8 has to be constructed so as to be able to be displaced with respect to the associated component so that the pivot movement can be carried out about the first articulation axis 7. To this end, various embodiments are conceivable. Reference may be made to the variants shown in Figures 6, 7 and 8 purely by way of example.

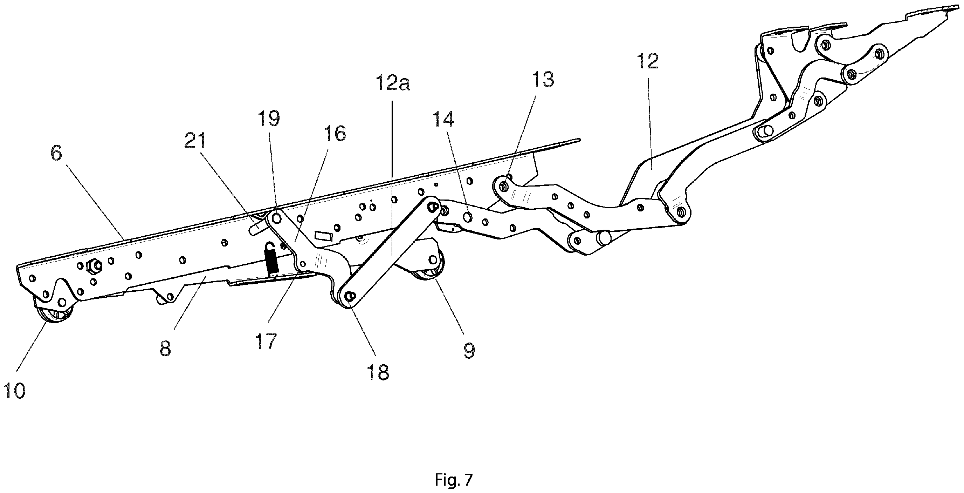

In the first variant according to Figure 6, the second articulation 17 in the central region 16c of the dual-arm lever arm 16 is displaceably guided in a slot 20 which is formed in the sliding member. Alternatively, in the second variant according to Figure 7, a slot 21 is formed in the seat frame 6, whereby the sixth articulation 19 is displaceably guided therein.

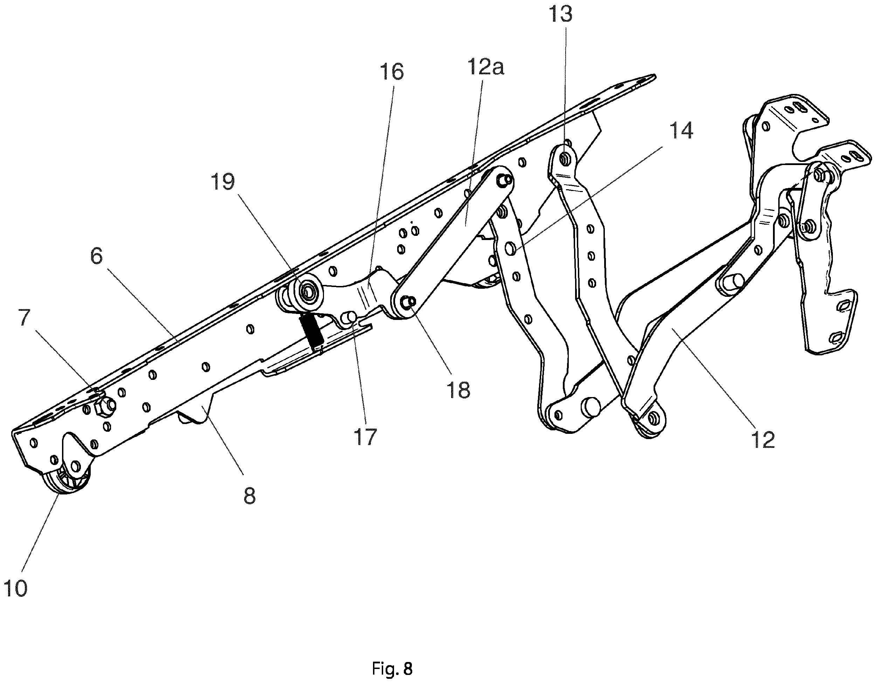

A third variant is illustrated in Figure 8 in which the relative movement between the dual-arm lever arm 16 and the seat frame 6 is achieved by the sixth articulation 19 being produced as a bearing, in particular as a plain bearing or, as illustrated in this instance, as a roller bearing. When the drive A is actuated in order to fold out the footrest (see Figure 6), a lever arm 12a of the rod mechanism 12 which is connected to the dual-arm lever arm 16 is moved in the direction of the arrow 22 and thereby brings about a rotation of the dual-arm lever arm about the second articulation 17 which in turn brings about a pivoting of the seat frame 6 about the first articulation axis 7. The embodiments according to Figures 7 and 8 function accordingly.

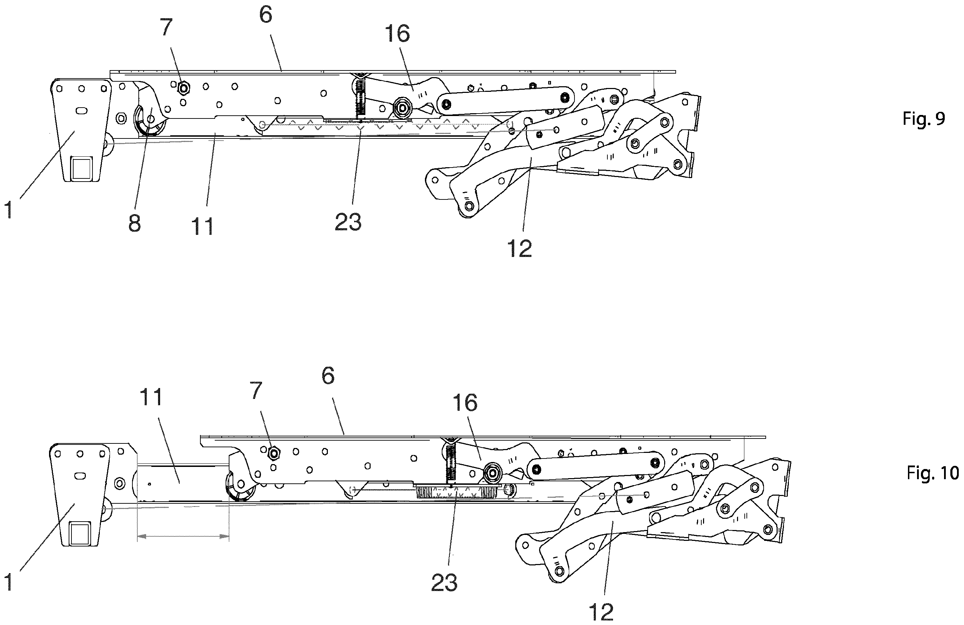

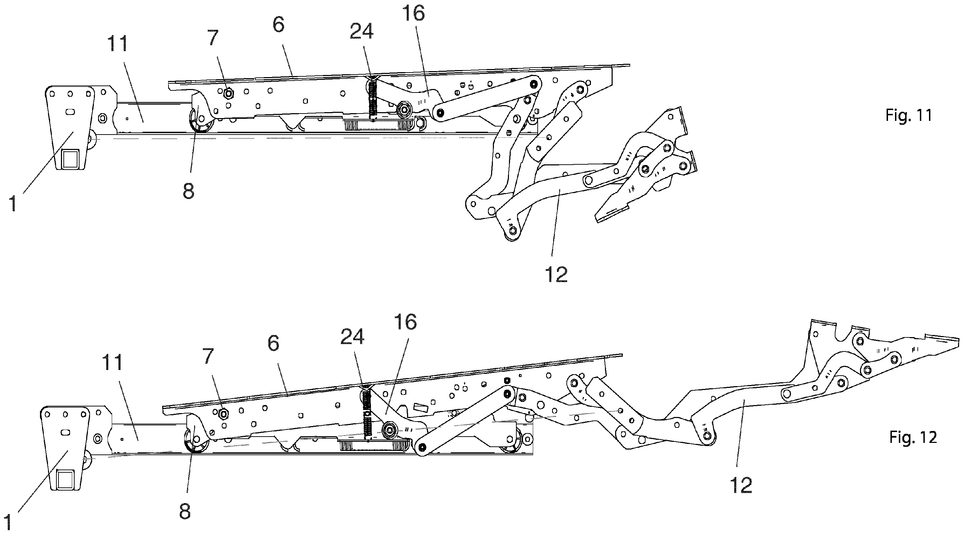

The base module makes provision for an adjustment of the seat depth to also be possible without folding out the footrest. In Figure 1, the seat arrangement has a seat depth b1 and in Figure 2 a seat depth b2, wherein b2 is at least 10%, preferably at least 15% greater than b1. However, since the drive extends between the base frame 1 and the second transverse rod 15 of the rod mechanism 12, according to Figure 9 there is provided a first resilient element 23 which is arranged between the base frame 1 and the guiding profile 11 which is coupled thereto and the sliding member 6 in such a manner that the sliding member 6 is urged into the second position which is shown in Figure 10 and in which the seat member has a greater seat depth (b2) than in the first position (b1). So that the sliding member can move into the first position shown in Figure 9, the actuator must therefore be actuated in order to shorten the spacing between the first transverse rod 1a and the second transverse rod 15. In order to displace the sliding member 6 without folding out the footrests, the actuator only has to be activated in order to increase the spacing a. As a result of the resilient element 23, the sliding member is then automatically moved into the second position shown in Figure 10. Only when the drive A is further actuated in order to increase the spacing a is the footrest folded out, as shown in Figures 11 and 12. However, the folding-out of the footrest also brings about via the dual-arm lever arm 16 at the same time a pivot movement of the seat frame about the first articulation axis 7.

There is further provided between the sliding member 8 and the seat frame 6 at least a second resilient element 24 which urges the seat frame 6 into the position according to Figure 11.

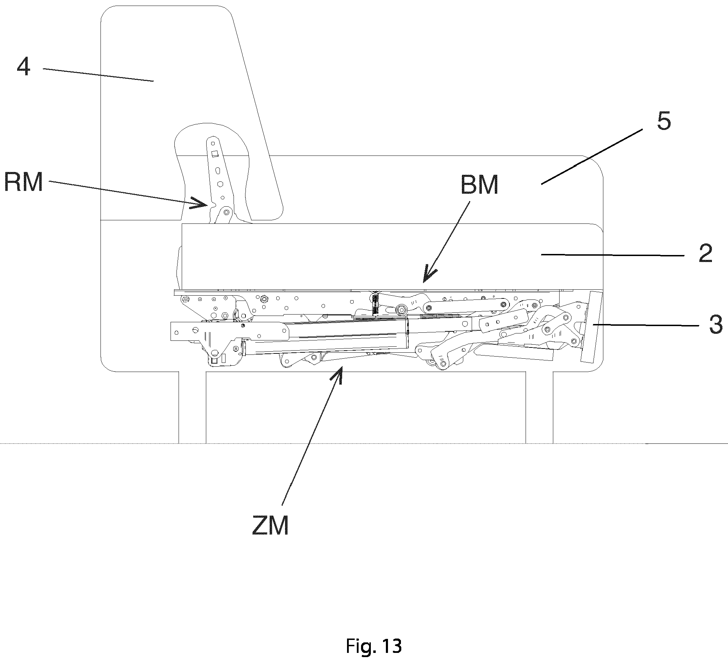

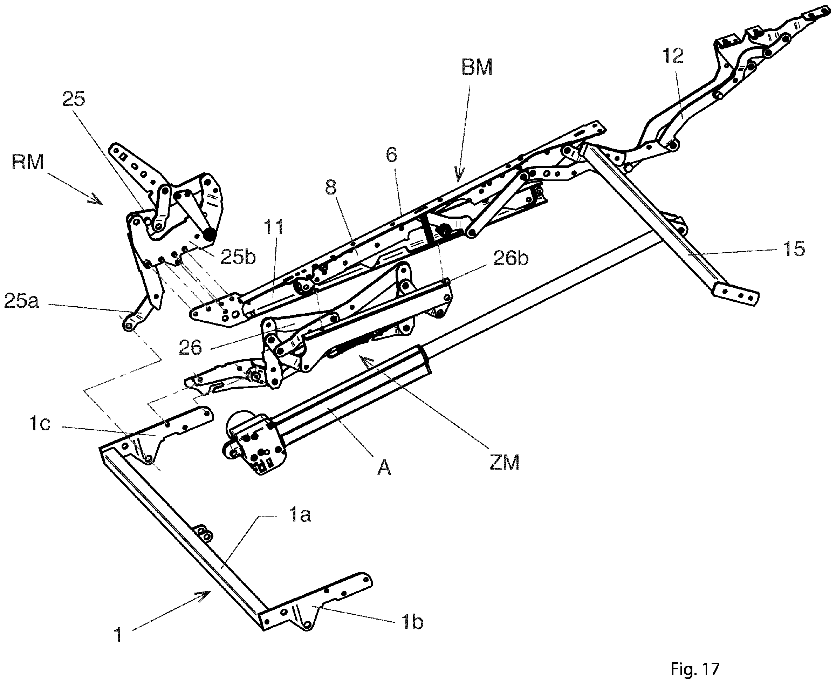

A second embodiment of the seat arrangement is described below with reference to Figures 13 to 21 and in addition to the above-described base module BM further also has a backrest inclination module RM for adjusting the inclination of the backrest 4. A zero space module ZM is further optionally provided. Figure 17 is an exploded view from which the connections of the individual modules with each other and with the base frame are derived. The base module BM substantially comprises the guiding profile 11, the sliding member 8, the seat frame 6 and the rod mechanism 12. The backrest inclination module comprises a coupling rod assembly 25 which is secured with a portion 25a to the base module BM and with another portion 25b to the base frame 1. The zero space module ZM has an actuation rod assembly 26 which is secured with a portion 26a to the base frame 1 and with another portion 26b to the base module BM.

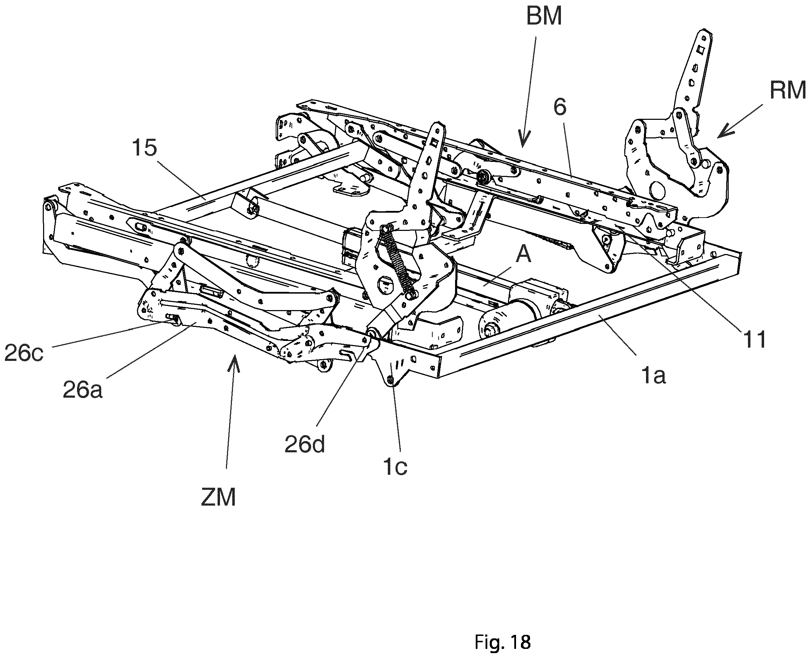

In addition to the additional backrest inclination module RM and the additional zero space module ZM, there is further also the additional difference with respect to the first embodiment that the base module BM is not secured in a fixed manner to the base frame 1 with the guiding profile 11 thereof, but instead, in the same manner as the zero space module ZM and the backrest inclination module RM, is coupled to the base frame 1 in an articulated manner. The portion 26a of the zero space module ZM has slots 26c and 26d, wherein the slots serve to secure to the base frame 1 or another fixed component, such as, for example, an armrest carrier (Figure 18).

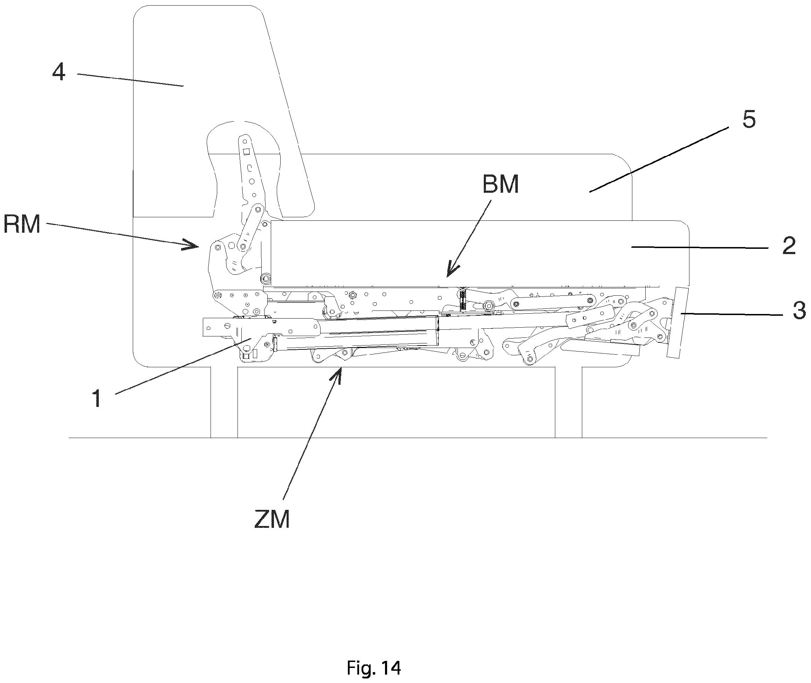

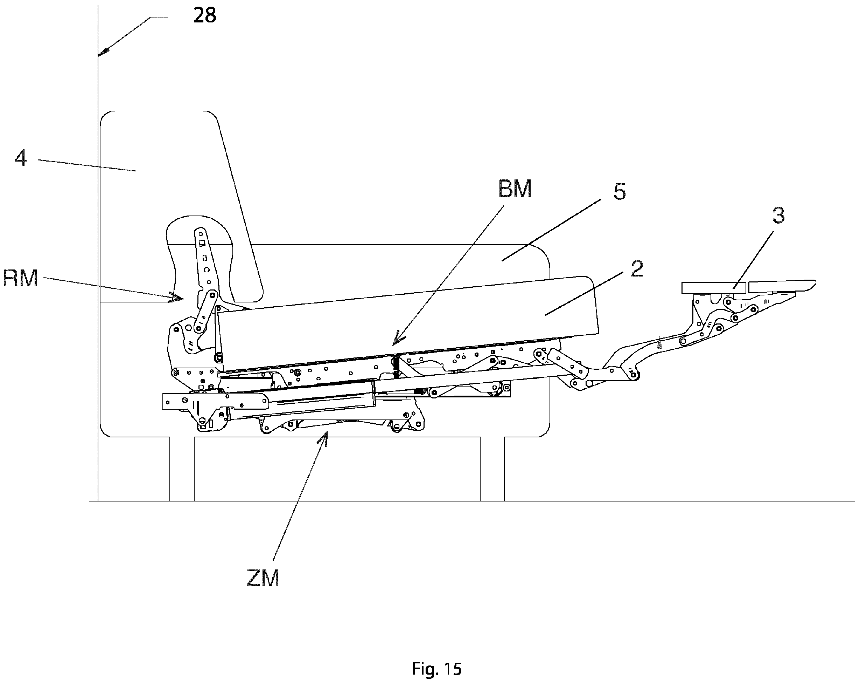

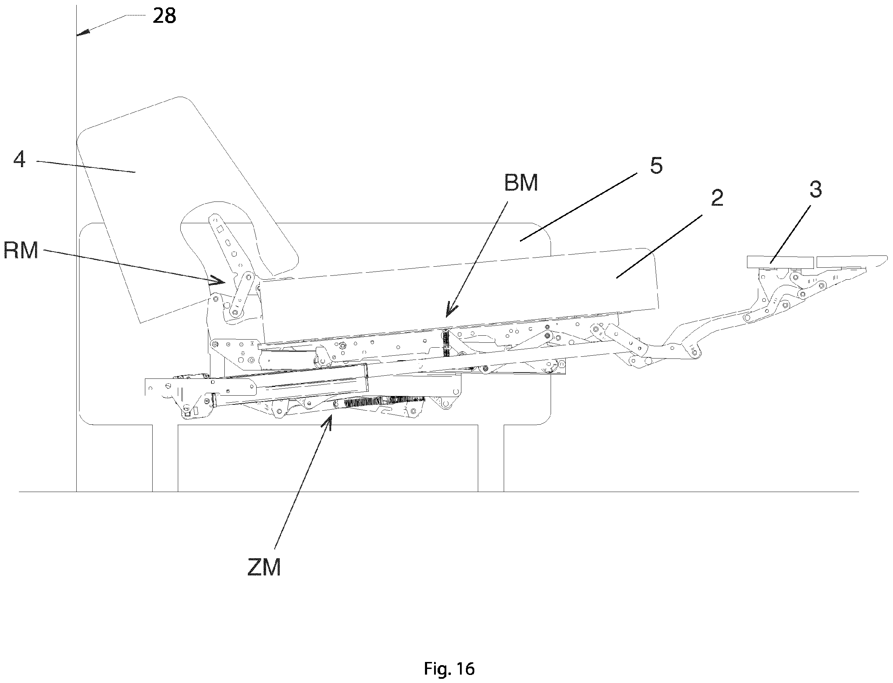

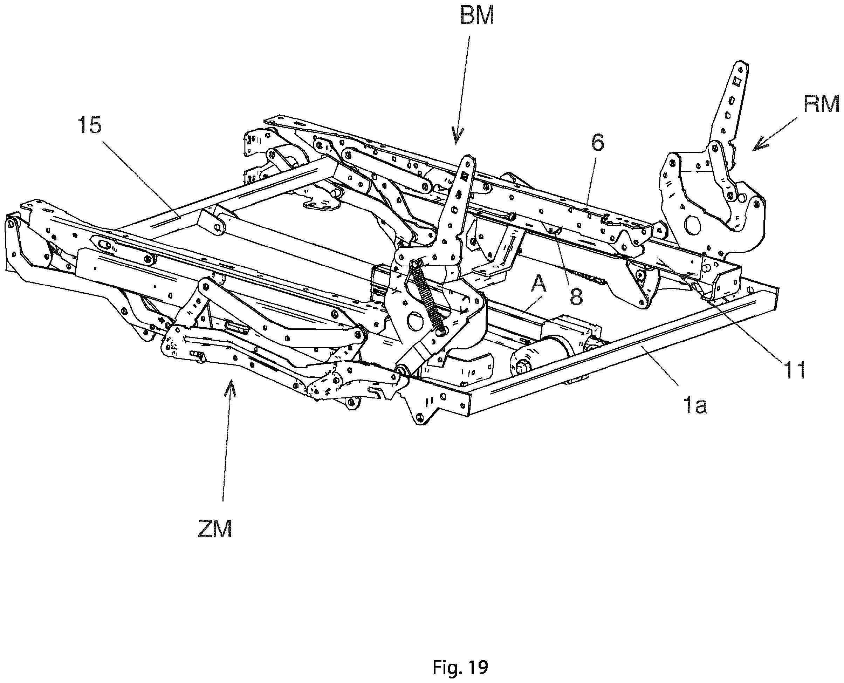

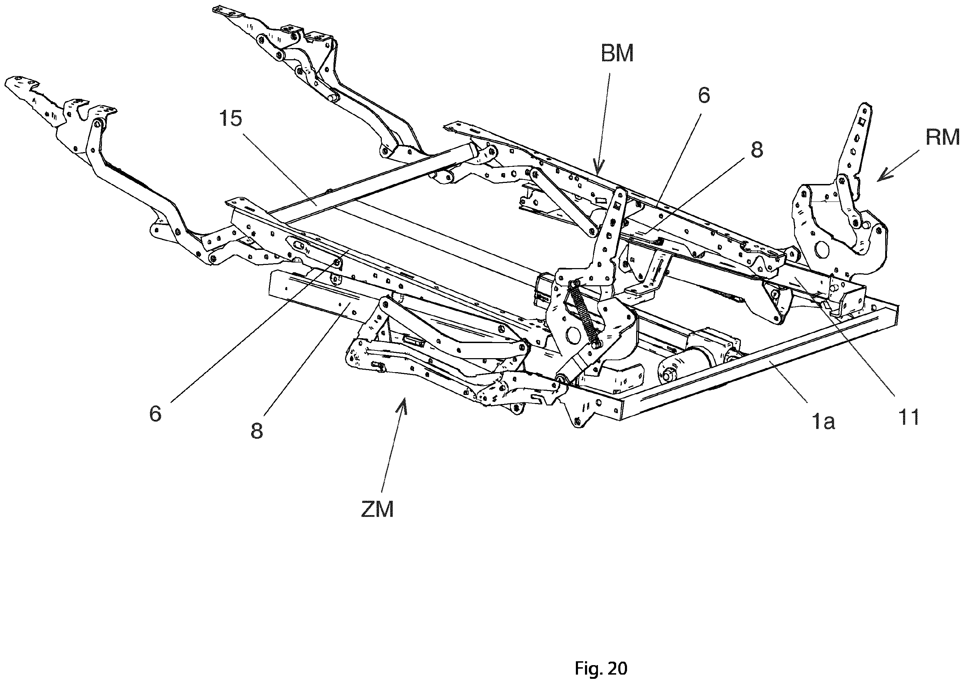

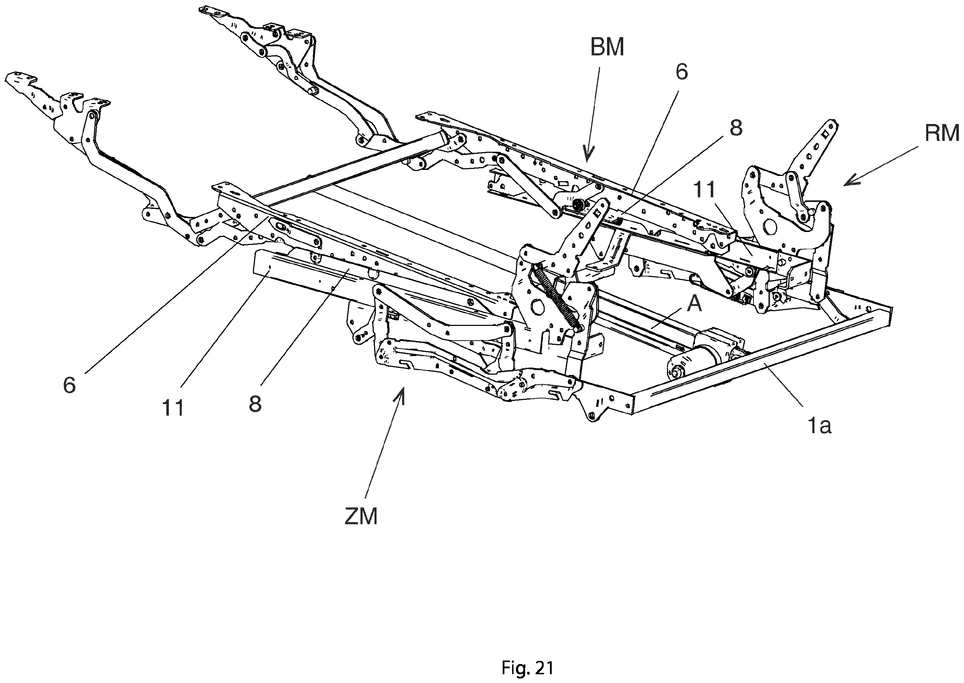

In order to move from the upright basic position according to Figure 13 into the horizontal or reclined position according to Figure 16, the seat depth is initially brought about by displacing the sliding member 8 along the guiding profile 11. The increased seat depth is produced from Figure 14 or from the position of the seat mechanism according to Figure 19 in comparison with Figure 13 or Figure 18. A further actuation of the drive A leads to folding out of the footrest 3 and an inclination of the seat frame 6 in accordance with the movement sequence, as already described in the first embodiment. The position which is then produced can be seen in Figures 15 and 20. Until then, there has been no movement of the backrest 4. If the drive A is further actuated in order to increase the spacing between the first transverse rod 1a and the second transverse rod 15, as a result of the zero space module ZM there is produced a displacement of the entire base module BM and consequently also an actuation of the backrest inclination module since it is secured to the base module BM on the one hand and to the fixed base frame 1 on the other hand. Consequently, the seat member 2 is again displaced further forwards and the backrest can be inclined backwards without a significant change of the spacing with respect to a rear wall 28 being produced. The seat arrangement can consequently also be placed in the upright position in the immediate vicinity of the wall 28 and can nonetheless be moved into the horizontal or reclined position shown in Figures 16 and 21.

The entire seat mechanism can be produced in an extremely compact form, the entire structural height of the seat mechanism including the folded-in footrest thus comprises no more than 20 cm, preferably no more than 18 cm and extremely preferably no more than 15 cm. This compact construction form enables the seat mechanism to be accommodated in a relatively unobtrusive manner so that there can be provided an aesthetically pleasing seat arrangement which nonetheless allows the comfort of a very variable adjustability between an upright position and a horizontal or reclined position.

## Claims

1. Seat arrangement having a base frame (1), a seat member (2) and a footrest (3), wherein the seat member has a seat frame (6) which is retained on a sliding member (8) so as to be able to be pivoted about a first articulation axis (7), wherein the sliding member is displaceably guided between a first and a second position in a guiding profile (11), and wherein the footrest (3) is articulated to the seat frame (6) by means of a rod mechanism (12) and can be adjusted between a folded-in position and a folded-out position,
**characterised in that**
a drive (A) for displacing the sliding member (8) and for folding the footrest (3) in and out is provided between the base frame (1) and the rod mechanism (12) of the footrest and
there is provided a dual-arm lever arm (16) having a first end (16a), a second end (16b) and a central region (16c), wherein the dual-arm lever arm is rotatably supported on the sliding member (8) in the central region thereof and is connected with the first end (16a) thereof to the rod mechanism (12) of the footrest (3) and with the second end (16b) thereof to the seat frame (6) in such a manner that a movement of the footrest between the folded-in and folded-out position brings about a pivot movement of the seat frame about the first articulation axis (7) between a basic position and an inclined position.

2. Seat arrangement according to claim 1, **characterised in that** the dual-arm lever arm (6) is rotatably supported on the sliding member (8) by means of a second articulation (17), wherein the second articulation is guided in a slot (20) which is formed in the sliding member.

3. Seat arrangement according to claim 1, **characterised in that** the connection of the dual-arm lever arm (16) to the seat frame (6) is carried out by means of a bearing, in particular a plain bearing or a roller bearing.

4. Seat arrangement according to claim 1, **characterised in that** the connection of the dual-arm lever arm (16) to the seat frame is also produced by means of a second articulation (17) which is guided in a slot (21) formed in the seat frame (6) .

5. Seat arrangement according to claim 1, **characterised in that** the first articulation axis (7) is arranged at a rear end of the seat frame (6) and the rod mechanism (12) of the footrest is coupled to a front end of the seat frame.

6. Seat arrangement according to claim 1, **characterised in that** between the base frame (1) and the sliding member (8) there is provided at least a first resilient element (23) which urges the sliding member (8) into the second position in which the seat member has a greater seat depth than in the first position.

7. Seat arrangement according to claim 1, **characterised in that** between the sliding member (8) and the seat frame (6) there is provided at least a second resilient element (24) which urges the seat frame (6) into the basic position.

8. Seat arrangement according to claim 1, **characterised in that** the base frame (1) has a first transverse rod (1a) and the drive (A) is formed by a linear actuator which is coupled with one end to the first transverse rod and with the other end thereof to a second transverse rod (15) of the rod mechanism (12) of the footrest (3).

9. Seat arrangement according to claim 1, **characterised in that** the seat member (2) in the second position of the sliding member (8) has a seat depth which is at least 10% greater than in the first position of the sliding member.

10. Seat arrangement according to claim 1, **characterised in that** the seat frame (6) is pivoted between the basic position and the inclined position through at least 5° about the first articulation axis (7).

11. Seat arrangement according to claim 1, **characterised in that** the seat arrangement further has a base module (BM) which comprises the guiding profile (11), the sliding member (8), the seat frame (6) and the rod mechanism (12) and is displaceably guided in the base frame (1).

12. Seat arrangement according to claim 1, **characterised in that** the seat arrangement further comprises a backrest (4) and a backrest inclination module (RM) for adjusting the inclination of the backrest.

13. Seat arrangement according to claim 11 and 12, **characterised in that** the backrest inclination module (RM) comprises a coupling rod assembly (25) which is secured with one portion to the base module (BM) and with another portion to the base frame (1).

14. Seat arrangement according to claim 13, **characterised in that** there is further provided a zero space module (ZM) which has an actuation rod assembly (26) which is secured with one portion to the base frame (1) and with another portion to the base module (BM).

## Patentansprüche

1. Sitzgelegenheit mit einem Grundrahmen (1), einem Sitzteil (2) und einer Fußstütze (3), wobei der Sitzteil einen Sitzrahmen (6) aufweist, der um eine erste Gelenkachse (7) schwenkbar an einem Schlitten (8) gehaltert ist, wobei der Schlitten zwischen einer ersten und einer zweiten Stellung in einem Führungsprofil (11) verschiebbar geführt ist, und wobei die Fußstütze (3) über einen Gestängemechanismus (12) am Sitzrahmen (6) angelenkt ist und zwischen einer eingeklappten Stellung und einer ausgeklappten Stellung verstellbar ist,
**dadurch gekennzeichnet, dass**
zwischen dem Grundrahmen (1) und dem Gestängemechanismus (12) der Fußstütze ein Antrieb (A) zur Verschiebung des Schlittens (8) und zum Ein- und Ausklappen der Fußstütze (3) vorgesehen ist und
ein zweiarmiger Hebelarm (16) mit einem ersten Ende (16a), einem zweiten Ende (16b) und einem mittleren Bereich (16c) vorgesehen ist, wobei der zweiarmige Hebelarm in seinem mittleren Bereich drehbar am Schlitten (8) gelagert ist und mit seinem ersten Ende (16a) mit dem Gestängemechanismus (12) der Fußstütze (39 und mit seinem zweiten Ende (16b) mit dem Sitzrahmen (6) derart verbunden ist, dass eine Bewegung der Fußstütze zwischen der eingeklappten und der ausgeklappten Stellung ein Schwenkbewegung des Sitzrahmens um die erste Gelenkachse (7) zwischen einer Grundstellung und einer geneigten Stellung bewirkt.

2. Sitzgelegenheit nach Anspruch 1, **dadurch gekennzeichnet, dass** der zweiarmige Hebelarm (6) mittels eines zweiten Gelenks (17) drehbar am Schlitten (8) gelagert ist, wobei das zweite Gelenk in einem im Schlitten ausgebildeten Schlitz (20) geführt ist.

3. Sitzgelegenheit nach Anspruch 1, **dadurch gekennzeichnet, dass** die Verbindung des zweiarmigen Hebelarms (16) mit dem Sitzrahmen (6) durch ein Lager, insbesondere ein Gleitlager oder ein Rolllager, realisiert ist.

4. Sitzgelegenheit nach Anspruch 1, **dadurch gekennzeichnet, dass** die Verbindung des zweiarmigen Hebelarms (16) mit dem Sitzrahmen mittels eines zweiten Gelenks (17) realisiert ist, das in einem im Sitzrahmen (6) ausgebildeten Schlitz (21) geführt ist.

5. Sitzgelegenheit nach Anspruch 1, **dadurch gekennzeichnet, dass** die erste Gelenkachse (7) an einem hinteren Endes des Sitzrahmens (6) angeordnet ist und der Gestängemechanismus (12) der Fußstütze an einem vorderen Ende des Sitzrahmens angekoppelt ist.

6. Sitzgelegenheit nach Anspruch 1, **dadurch gekennzeichnet, dass** zwischen dem Grundrahmen (1) und dem Schlitten (8) wenigstens ein erstes Federelement (23) vorgesehen ist, das den Schlitten (8) in die zweite Stellung drängt, in welcher der Sitzteil eine größere Sitztiefe als in der ersten Stellung aufweist.

7. Sitzgelegenheit nach Anspruch 1, **dadurch gekennzeichnet, dass** zwischen dem Schlitten (8) und dem Sitzrahmen (6) wenigstens ein zweites Federelement (24) vorgesehen ist, das den Sitzrahmen (6) in die Grundstellung drängt.

8. Sitzgelegenheit nach Anspruch 1, **dadurch gekennzeichnet, dass** der Grundrahmen (1) eine erste Querstange (1a) aufweist und der Antrieb (A) durch einen Linearaktuator gebildet wird, der mit einem Ende an der ersten Querstange und mit seinem anderen Ende an einer zweiten Querstange (15) des Gestängemechanismus (12) der Fußstütze (3) angekoppelt ist.

9. Sitzgelegenheit nach Anspruch 1, **dadurch gekennzeichnet, dass** der Sitzteil (2) in der zweiten Stellung des Schlittens (8) eine um wenigstens 10% größere Sitztiefe als in der ersten Stellung des Schlittens aufweist.

10. Sitzgelegenheit nach Anspruch 1, **dadurch gekennzeichnet, dass** der Sitzrahmen (6) zwischen der Grundstellung und der geneigten Stellung um wenigstens 5° um die erste Gelenkachse (7) geschwenkt ist.

11. Sitzgelegenheit nach Anspruch 1, **dadurch gekennzeichnet, dass** die Sitzgelegenheit ferner ein Basismodul (BM) aufweist, welches das Führungsprofil (11), den Schlitten (8), den Sitzrahmen (6) und den Gestängemechanismus (12) umfasst und verschiebbar im Grundrahmen (1) geführt ist.

12. Sitzgelegenheit nach Anspruch 1, **dadurch gekennzeichnet, dass** die Sitzgelegenheit ferner eine Rückenlehne (4) und ein Rückenlehen-Neigungsmodul (RM) zur Verstellung der Neigung Rückenlehne umfasst.

13. Sitzgelegenheit nach Anspruch 11 und 12, **dadurch gekennzeichnet, dass** das Rückenlehen-Neigungsmodul (RM) ein Kopplungsgestänge (25) umfasst, das mit einem Teil am Basismodul (BM) und mit einem anderen Teil am Grundrahmen (1) befestigt ist.

14. Sitzgelegenheit nach Anspruch 13, **dadurch gekennzeichnet, dass** ferner ein Zero-Space-Modul (ZM) vorgesehen ist, das ein Bestätigungsgestänge (26) aufweist, das mit einem Teil am Grundrahmen (1) und mit einem anderen Teil am Basismodul (BM) befestigt ist.

## Revendications

1. Agencement de siège ayant un cadre de base (1), un élément de siège (2) et un repose-pied (3), agencement dans lequel l'élément de siège a un cadre de siège (6) qui est retenu sur un élément coulissant (8), de manière à pouvoir pivoter autour d'un premier axe d'articulation (7), où l'élément coulissant est guidé de manière à pouvoir être déplacé, dans un profilé de guidage (11), entre une première et une seconde position, et où le repose-pied (3) est articulé sur le cadre (6) du siège au moyen d'un mécanisme à tiges (12) et peut être réglé entre une position repliée et une position déployée,
**caractérisé**
**en ce qu'**un entraînement (A) servant à déplacer l'élément coulissant (8) et à replier et à déployer le repose-pied (3) est prévu entre le cadre de base (1) et le mécanisme à tiges (12) du repose-pied, et
**en ce qu'**il est prévu un bras de levier (16) d'un double bras ayant une première extrémité (16a), une seconde extrémité (16b) et une région centrale (16c), où le bras de levier du double bras est supporté en rotation, sur l'élément coulissant (8), dans la région centrale dudit bras de levier, et est relié, par la première extrémité (16a) dudit bras de levier, au mécanisme à tiges (12) du repose-pied (3), et est relié, par la seconde extrémité (16b) dudit bras de levier, au cadre (6) du siège, de manière telle qu'un mouvement du repose-pied se produisant entre la position repliée et la position déployée provoque un mouvement pivotant du cadre du siège autour du premier axe d'articulation (7), ledit mouvement pivotant se produisant entre une position de base et une position inclinée.

2. Agencement de siège selon la revendication 1, **caractérisé en ce que** le bras de levier (16) du double bras est supporté en rotation sur l'élément coulissant (8) au moyen d'une deuxième articulation (17), où la deuxième articulation est guidée dans une fente (20) qui est formée dans l'élément coulissant.

3. Agencement de siège selon la revendication 1, **caractérisé en ce que** la jonction du bras de levier (16) du double bras, avec le cadre (6) du siège, est réalisée au moyen d'un palier, en particulier un palier lisse ou un palier à roulement.

4. Agencement de siège selon la revendication 1, **caractérisé en ce que** la jonction du bras de levier (16) du double bras, avec le cadre du siège, est réalisée également au moyen d'une deuxième articulation (17) qui est guidée dans une fente (21) formée dans le cadre (6) du siège.

5. Agencement de siège selon la revendication 1, **caractérisé en ce que** le premier axe d'articulation (7) est agencé au niveau d'une extrémité arrière du cadre (6) du siège, et le mécanisme à tiges (12) du repose-pied est couplé à une extrémité avant du cadre du siège.

6. Agencement de siège selon la revendication 1, **caractérisé en ce qu'**il est prévu, entre le cadre de base (1) et l'élément coulissant (8), au moins un premier élément résilient (23) qui pousse l'élément coulissant (8) dans la seconde position dans laquelle l'élément du siège a une plus grande profondeur de siège que celle dans la première position.

7. Agencement de siège selon la revendication 1, **caractérisé en ce qu'**il est prévu, entre l'élément coulissant (8) et le cadre (6) du siège, au moins un deuxième élément résilient (24) qui pousse le cadre (6) du siège dans la position de base.

8. Agencement de siège selon la revendication 1, **caractérisé en ce que** le cadre de base (1) comprend une première tige transversale (1a), et l'entraînement (A) est formé par un actionneur linéaire qui est couplé, par une extrémité, à la première tige transversale, ledit actionneur linéaire étant couplé, par son autre extrémité, à une deuxième tige transversale (15) du mécanisme à tiges (12) du repose-pied (3).

9. Agencement de siège selon la revendication 1, **caractérisé en ce que** l'élément (2) du siège, dans la seconde position de l'élément coulissant (8), a une profondeur de siège qui est au moins de 10 % supérieure à celle dans la première position de l'élément coulissant.

10. Agencement de siège selon la revendication 1, **caractérisé en ce que** le cadre (6) du siège pivote, entre la position de base et la position inclinée, au moins de 5° autour du premier axe d'articulation (7).

11. Agencement de siège selon la revendication 1, **caractérisé en ce que** l'agencement de siège comprend en outre un module de base (BM) qui comprend le profilé de guidage (11), l'élément coulissant (8), le cadre (6) du siège et le mécanisme à tiges (12), et qui est guidé de manière à pouvoir être déplacé dans le cadre de base (1).

12. Agencement de siège selon la revendication 1, **caractérisé en ce que** l'agencement de siège comprend en outre un dossier de siège (4) et un module d'inclinaison (RM) du dossier de siège, ledit module servant à régler l'inclinaison du dossier de siège.

13. Agencement de siège selon les revendications 11 et 12, **caractérisé en ce que** le module d'inclinaison (RM) du dossier de siège comprend un ensemble de tiges de couplage (25), ensemble qui est fixé, par une partie, sur le module de base (BM), ledit ensemble étant fixé, par une autre partie, sur le cadre de base (1).

14. Agencement de siège selon la revendication 13, **caractérisé en ce qu'**il est prévu en outre un module d'espace nul (ZM) qui comprend un ensemble de tiges d'actionnement (26), ensemble qui est fixé, par une partie, sur le cadre de base (1), ledit ensemble étant fixé, par une autre partie, sur le module de base (BM).
